# EUROPEAN PATENT APPLICATION

(11) **EP 2 187 236 A1**
(43) Date of publication of application: **19.05.2010**
(21) Application number: 08168467.2
(22) Date of filing: 06.11.2008
(51) Int. Cl.: G01S 13/93, G01S 13/86

(54) **A collision warning apparatus**

(71) Applicant: Ford Global Technologies, LLC, Dearborn, MI 48126 (US)
(72) Inventor: Ekmark, Jonas, 424 70 Olofstorp (SE); Coelingh, Erik, 424 70 Olofstorp (SE); Hultén, Johan, 413 16 Göteborg (SE)
(74) Representative: Andersson, Per Rune

(57) **Abstract**

The invention relates to a collision warning apparatus for a vehicle comprising an object detecting means (11), a visibility detecting means (12), a computer unit (13) with a comparison and calculation system (16) and an application system (14), said object detecting means (11) being arranged to detect objects in the surroundings of said vehicle (2), said visibility detecting means (12) being arranged to detect visibility conditions in said surroundings of said vehicle (2), and said application system (14) being arranged to warn the driver of said vehicle (2) when there is a risk for an imminent collision with an object (15) in said surroundings of said vehicle (2). According to the invention, said comparison and calculation system (16) is arranged to compare data from said object detecting means (11) with data from said visibility detecting means (12) and said application system (14) is arranged to be activated by said computer unit (13) when said data from said object detecting means (11) indicates that it has detected an object (15) in the surroundings of said vehicle (2) and when said data from said visibility detecting means (12) indicates that it has detected low or no visibility in the surroundings of said vehicle (2).

## Description

### TECHNICAL FIELD:

The present invention relates to vehicle safety devices, and more particularly, to a collision warning apparatus for a vehicle and a method for providing a collision warning for a vehicle according to the preambles of the appended independent claims.

### BACKGROUND ART:

Driving a vehicle in very poor driving conditions such as for example darkness and dense mist, heavy rainfall or heavy snowfall etc., can be difficult for a driver since he or she has to discern and detect obstacles which might be in front of the vehicle and which might be large or heavy enough to cause a severe accident. During such poor driving conditions, the view can be limited to a few metres and it is then almost impossible to detect obstacles in the surroundings of the vehicle before a collision has actually occurred.

The patent application US 2007/0008182 discloses an image processing device for a vehicle to be used in case of bad weather such as fog. The image processing device includes a radar, a camera and an image processing unit. The radar indicates a position of a preceding vehicle in relation to the subject vehicle. The radar outputs the object data to the image processing unit, which includes an image calculation unit which determines the visibility in front of the subject vehicle based on data received from the radar and the camera. The image calculation unit outputs the detected visibility to an application system, which includes a collision mitigation system to shorten a brake latency period by controlling a brake actuator to apply a force on a brake pedal.

The image processing device described in US 2007/0008182 is based on the fact that the image calculation unit detects the visibility in front of the subject vehicle. The detected visibility is based on the object data from the radar and the result of trying to detect the preceding vehicle in front of the subject vehicle, i.e. result of whether or not the preceding vehicle is detected in a clipped image. Thus, the warning signals to the driver from the application system are dependent on whether the image processing unit can detect objects in front of the vehicle, which is often not the case in bad weather.

Consequently, the prior art in this field is associated with a problem in that it cannot detect and warn the driver for a possible collision object in front of the vehicle when there is no or very low visibility in the surroundings of the vehicle.

### SUMMARY OF THE INVENTION:

The above problems have been solved by a method and an apparatus according to the appended claims. It is an object of the invention to provide an improved collision warning apparatus for a vehicle and an improved method for providing a collision warning for a vehicle.

According to an embodiment of the invention there is provided a collision warning apparatus of the kind mentioned initially, which comprises an object detecting means, a visibility detecting means, a computer unit with a comparison and calculation system and an application system, said object detecting means being arranged to detect objects in the surroundings of said vehicle, said visibility detecting means being arranged to detect visibility conditions in said surroundings of said vehicle, and said application system being arranged to warn the driver of said vehicle when there is a risk for an imminent collision with an object in said surroundings of said vehicle.

According to the invention, said comparison and calculation system is arranged to compare data from said object detecting means with data from said visibility detecting means and that said application system is arranged to be activated by said computer unit when said data from said object detecting means indicates that it has detected an object in the surroundings of said vehicle and when said data from said visibility detecting means indicates that it has detected low or no visibility in the surroundings of said vehicle.

According to an embodiment, the object detecting means can be arranged to detect objects in front of said vehicle or diagonally in front of said vehicle. Furthermore, said object detecting means is preferably constituted by one or more radar devices.

Also, according to an embodiment, the object detecting means may have a vertical field of view of +/- 0-10 degrees and a horizontal field of view of +/-40 degrees when detecting objects in the surroundings of a vehicle.

Furthermore, the visibility detecting means can be arranged to detect visibility conditions in the surroundings in front of said vehicle or diagonally in front of the vehicle. Also, the visibility detecting means is suitably constituted by one or more camera devices.

Also, according to an embodiment, the object detecting means can be provided with an image processing unit which is arranged to compare the data from said object detecting means with pre-programmed images of objects which are considered to be obstacles for the vehicle.

Furthermore, the computer unit can be arranged to activate a human machine interface provided in said application system when a first time interval is reached before an estimated collision time with said object. Suitably, said human machine interface is arranged to emit warning signals to said driver in the form of audible signals and/or visible signals and/or haptic warnings.

Also, the computer unit can be arranged to activate a brake device provided in said application system when a second time interval is reached before an estimated collision time with said object. The brake device is suitably arranged to provide a brake support or an auto brake to said vehicle.

### BRIEF DESCRIPTION OF THE DRAWINGS:

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Fig. 1: shows a schematic side view of a vehicle provided with the apparatus according to the invention, and
- Fig. 2: shows a block diagram of a preferred embodiment of the invention.

### DETAILED DESCRIPTION:

In the description below, directions will be given with reference to a vehicle oriented in a forward driving direction.

The present invention is adapted to be used as a complementary to arrangements according to prior art, for example as shown in EP 1 327 550, which discloses a braking notification apparatus for a motor vehicle. The braking notification apparatus monitors the speed and the relative distance to a leading vehicle, in favourable visibility conditions, and will notify the driver to slow down if the leading vehicle approaches too fast.

The apparatus according to the invention is used when the visibility condition is very poor, and there is very low or no visibility at all in the surroundings of the vehicle. Such a poor visibility condition may occur during heavy rainfall, dense snowfall, dense mist etc.

The present invention has as its object to avoid the risk for a frontal contact between a subject vehicle and a preceding vehicle by means of one or more warnings to the driver of the subject vehicle, so that the driver has enough time to act promptly as a driver to be able to avoid a collision. Application of the present invention should be made before the opportunity to avoid a collision has passed.

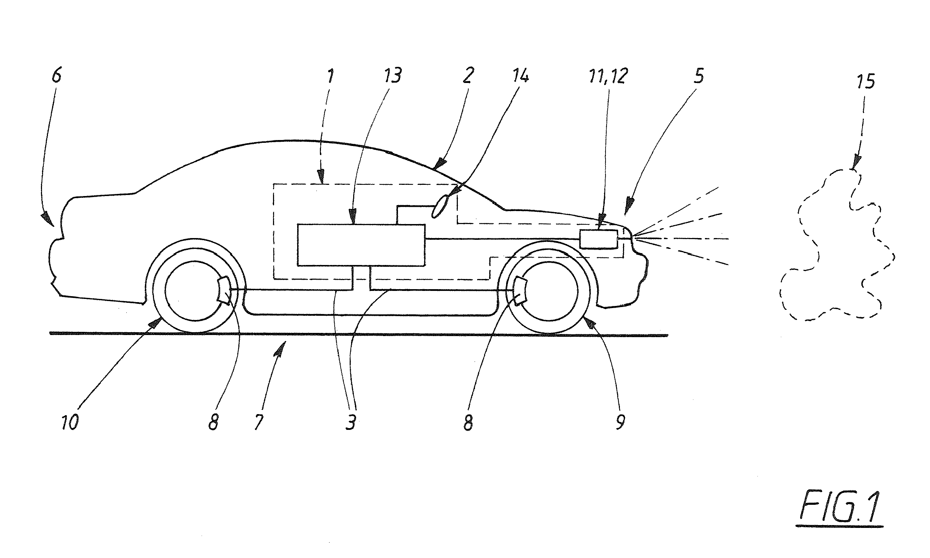

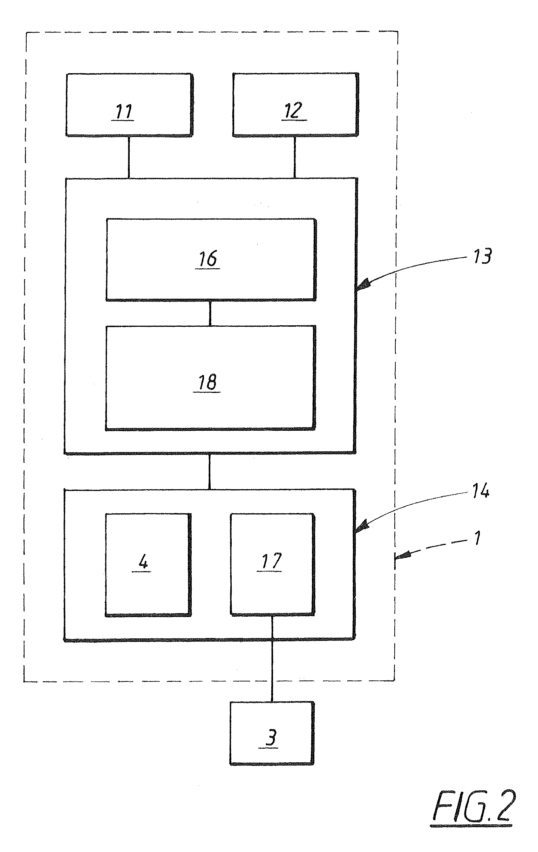

Fig. 1 shows a vehicle 2 provided with a collision warning apparatus 1 according to the invention. The collision warning apparatus 1 is also shown in Fig. 2. Said apparatus 1 is connected to a braking system 3 of the vehicle 2 and a human machine interface 4 (not shown in Fig. 1) which is preferably provided in the vicinity of or in the driver's seat. The collision warning apparatus 1 will hereinafter be referred to as the "apparatus".

The components forming part of the apparatus 1 are suitably arranged in a front part 5 of the vehicle 2, in order to detect objects or possible obstacles in the surroundings of the vehicle, preferably in an area or zone located in front of the vehicle 2 and preferably also located diagonally in front of the vehicle 2. Since the invention is arranged for detecting objects in order to prevent collisions, the area or zone to be supervised should preferably correspond to an area (ahead of the vehicle and preferably also diagonally in front of the vehicle, on both sides) in which it can be expected that objects which may cause such a collision are positioned.

In principle, the apparatus 1 can also be arranged on a rear part 6 or along the longitudinal sides 7 of the vehicle 2 in order to detect objects 15 or possible obstacles in a surrounding vicinity of the longitudinal sides or the rear part 6 of the vehicle 2.

The braking system 3 has brake mechanisms 8 for front wheels 9 and rear wheels 10, which are connected to a brake pedal (not shown) of the vehicle 2 and to the apparatus 1. The brake mechanisms 8 are arranged so that they may be either automatically activated by the apparatus 1 or manually by the driver.

Fig. 2 shows a block diagram of a preferred embodiment of the apparatus 1 according to the invention. The apparatus 1 comprises an object detecting means 11, a visibility detecting means 12, a computer unit 13 and an application system 14.

The object detecting means 11 and the visibility detecting means 12 are arranged to cooperate in order to evaluate the presence of objects and the visibility in surroundings of the vehicle 2. In particular, the object detecting means 11 is arranged to detect stationary or moving objects 15 in the surroundings of the vehicle and the visibility detecting means 12 is arranged to detect the visibility conditions in the surroundings.

Further, the object detecting means 11 is suitably constituted by at least one radar device which is arranged to detect objects in front of the vehicle 2. The radar device 11 suitably has a vertical field of view of +/- 0-10 degrees, and preferably +/- 5 degrees, and a horizontal field of view of +/- 40 degrees, and preferably +/- 20 degrees. The radar device 11 has a range of at least 150 metres, and is arranged to emit radar waves preferably with a wavelength within the millimetre range.

Further, the visibility detecting means 12 is arranged to detect the visibility conditions in the surroundings in front of the vehicle 2 and preferably also diagonally in front of the vehicle. The visibility detecting means 12 is preferably constituted by one or more camera devices.

The application system 14 is arranged to warn the driver when there is a risk or danger of an imminent collision with an object 15 in the surroundings of the vehicle 2, for example an object 15 which is located ahead of the vehicle 2. The application system 14 is arranged to be activated by the computer unit 13 when data from the object detecting means 11 indicates that it has detected an object in the surroundings of the vehicle 2 and when the data from the visibility detecting means 12 indicates that it has detected low or no visibility in the surroundings. Such low visibility conditions can be said to correspond for example to weather conditions such as heavy rainfall, dense snowfall, dense mist or similar conditions.

Furthermore, the computer unit 13 is provided with a comparison and calculation system 16, which is arranged to compare data from the object detecting means 11 with data from the visibility detecting means 12. The object detecting means 11 is provided with an image processing unit, which is arranged to compare the data from the object detecting means 11 with certain pre-programmed images. These pre-programmed images are images of outlines of larger objects 15 such as cars, trucks, large wild animals or domestic animals etc., which objects 15 can lead to serious consequences such as injury to the occupants of the vehicle 2, in the event of a collision with the vehicle 2. The pre-programmed images will achieve an apparatus 1 with a low error rate, since the apparatus 1 will neglect objects which does not represent a collision threat such as soda cans, bridges, litter etc. Comparing data from an object detecting system with pre-defined, stored images is generally known from the field of digital image treatment, and for this reason such methods are not described in detail here.

The computer unit 13 of the apparatus 1 according to the invention is provided with a path prediction device which is arranged to predict the intended drive-way of the vehicle 2. Based on the data from the path prediction device, it is possible to filter out objects which are not in the intended drive-way of the vehicle 2, e.g. objects at the sides, i.e. diagonally in front of the drive-way. Examples of such objects are trees or buildings positioned beside the drive-way. The purpose of the path prediction device is consequently to ensure that the object 15 which is detected by the object detecting means 11 is a possible obstacle 15 in the drive-way of the vehicle. This is to minimize the rate of incorrect warnings.

The visibility detecting means 12 is arranged to detect the visibility in the surroundings of the vehicle 2. If the visibility detecting means 12 only can detect a blurred image of the surroundings, which for example occurs during dense mist, the comparison and calculation system 16 is arranged to determine that is it low or no visibility in the surrounding.

Furthermore, the computer unit 13 is arranged to activate the human machine interface 4 provided in the application system 14 when a possible collision object 15 (i.e. an object 15 which potentially may cause a collision) is detected and when visibility conditions are poor and also it can be expected that a collision with the object 15 will occur within a first time interval (or time period) t1. The computer unit 13 comprises a comparison and calculation system 16 which is arranged to calculate when the vehicle 2 is going to collide with the object 15, based on parameters such as the speed of the vehicle and the speed of the object 15, after which the human machine interface 4 is activated by a control unit 18. The first time interval t1 preferably corresponds to 2-3 seconds before the estimated collision, but variations may exist within the scope of the invention. The human machine interface 4 is arranged to emit warning signals to the driver in the form of audible signals and/or visible signals, such as flashing lights, and/or haptic warnings.

Furthermore, the computer unit 13 is also arranged to activate a brake device 17 provided in the application system 14 when an object 15 is detected and when visibility conditions are poor and also it can be expected that a collision with the object 15 in front of the vehicle 2 can be expected to take place within a second time interval t2. The comparison and calculation system 16 is arranged to calculate when the vehicle 2 is going to collide with the object 15, based on parameters such as the speed of the vehicle 2 and the speed of the object 15, if any, after which the brake device 17 is activated by a control unit 18. The brake device 17 is arranged to provide a brake support or an auto brake to the vehicle 2. The second time interval t2 is preferably 1 second before the estimated collision time as calculated by the comparison and calculation system 16 in the computer unit 13. However, the length of this second time period t2 may also vary within the scope of the present invention.

Furthermore, the invention also relates to a method for providing a collision warning for a vehicle. The method comprises the steps of detecting stationary or moving objects in the surroundings of the vehicle 2 with an object detecting means 11. The method comprises the step of detecting visibility conditions in the surroundings of the vehicle 2 with a visibility detecting means 12 and creating a warning with an application system 14 to the driver when there is an imminent risk for collision with an object 15 in the surroundings of the vehicle 2.

Furthermore, the method comprises the steps of comparing data from the object detecting means 11 with data from the visibility detecting means 12 and activating the application system 14 when the data from the object detecting means 11 detects an object in the surroundings of the vehicle 2 and when the data from the visibility detecting means 12 detects low or no visibility in the surroundings of the vehicle 2.

If the object detecting means 11 detects a possible collision object 15 and the visibility detecting means detects good visibility in the surroundings of the vehicle, the application system 14 will not be activated, since the apparatus 1 according to the invention is only intended to be complementary to existing braking notification apparatuses which have excellent functionality in driving conditions with good visibility.

Further, the method comprises the steps of comparing the data from the object detecting means 11 with pre-programmed images of objects 15 which are considered to be obstacles for the vehicle 2. If the pre-programmed images coincide with images of outlines of larger objects and the visibility detecting means 12 detects low or no visibility, then a human machine interface 4 is activated a first time period before an estimated collision time with the object 15, and activation of a brake system 3 of the vehicle 2 a second time period before an estimated collision time with the object 15.

In another alternative embodiment, the visibility detecting means can suitably be a lidar *(Light Detection and Ranging)* device which measures properties of scattered light to find range and/or other information of a distant target. The lidar can detect objects on a long range distance, but the lidar is very sensitive and there must be very good visibility in the surrounding outside the vehicle, if the lidar is going to detect any objects. Thus, the aim with the lidar in this application is that it shall not detect anything, since then there is very low or no visibility.

Finally, the invention is not limited to the embodiments and alternatives described above but can be varied within the scope as defined of the appended claims.

## Claims

1. A collision warning apparatus for a vehicle comprising an object detecting means (11), a visibility detecting means (12), a computer unit (13) with a comparison and calculation system (16) and an application system (14), said object detecting means (11) being arranged to detect objects in the surroundings of said vehicle (2), said visibility detecting means (12) being arranged to detect visibility conditions in said surroundings of said vehicle (2), and said application system (14) being arranged to warn the driver of said vehicle (2) when there is a risk for an imminent collision with an object (15) in said surroundings of said vehicle (2), **characterized in that** said comparison and calculation system (16) is arranged to compare data from said object detecting means (11) with data from said visibility detecting means (12) and that said application system (14) is arranged to be activated by said computer unit (13) when said data from said object detecting means (11) indicates that it has detected an object (15) in the surroundings of said vehicle (2) and when said data from said visibility detecting means (12) indicates that it has detected low or no visibility in the surroundings of said vehicle (2).

2. Collision warning apparatus according to claim 1, **characterized in that** said object detecting means (11) is arranged to detect objects (15) in front of said vehicle (2) or diagonally in front of said vehicle (2).

3. Collision warning apparatus according to claim 2, **characterized in that** said object detecting means (11) is one or more radar devices.

4. Collision warning apparatus according to claim 2 or 3, **characterized in that** said object detecting means (11) has a vertical field of view of +/- 0-10 degrees and a horizontal field of view of +/- 40 degrees.

5. Collision warning apparatus according to claim 1, **characterized in that** said visibility detecting means (12) is arranged to detect visibility conditions in the surroundings in front of said vehicle (2).

6. Collision warning apparatus according to claim 5, **characterized in that** said visibility detecting means (12) is one or more camera devices.

7. Collision warning apparatus according to claim 1, **characterized in that** said object detecting means (11) is provided with an image processing unit which is arranged to compare the data from said object detecting means (11) with pre-programmed images of objects (15) which are considered to be obstacles (15) for the vehicle (2).

8. Collision warning apparatus according to claim 1, **characterized in that** said computer unit (13) is arranged to activate a human machine interface (4) provided in said application system (14) when a first time period (t1) is expected to lapse until an estimated collision time with said object (15).

9. Collision warning apparatus according to claim 8, **characterized in that** said human machine interface (4) is arranged to emit warning signals to said driver in the form of audible signals and/or visible signals and/or haptic warnings.

10. Collision warning apparatus according to claim 1, **characterized in that** said computer unit (13) is arranged to activate a brake device (17) provided in said application system (14) when a second time period (t2) is expected to lapse until an estimated collision time with said object (15).

11. Collision warning apparatus according to claim 10, **characterized in that** said brake device (17) is arranged to provide a brake support or an auto brake to said vehicle (2).

12. A vehicle **characterized in that** said vehicle comprises a collision warning apparatus (1) as claimed in any one of the preceding claims.

13. Method for providing a collision warning for a vehicle comprising the steps of:
- detecting stationary or moving objects in the surroundings of said vehicle with an object detecting means (11),
- detecting visibility conditions in the surroundings of said vehicle with a visibility detecting means (12),
- creating a warning to the driver, with an application system (14), when there is a risk for an imminent collision with an object (15) in said surroundings of said vehicle (2),
**characterized in that** said method further comprises the steps of:
- comparing data from said object detecting means (11) with data from said visibility detecting means (12),
- activating said application system (14) when said data from said object detecting means (11) detects an object (15) in said surroundings of said vehicle (2) and when said data from said visibility detecting means (12) detects low or no visibility in said surroundings of said vehicle (2).

14. Method according to claim 13, **characterized in that** said method further comprises the step of:
- comparing said data from said object detecting means (11) with pre-programmed images of objects (15) which are considered to be obstacles for the vehicle (2).

15. Method according to claim 13 or 14, **characterized in that** said method further comprises the steps of:
- activation of a human machine interface (4) when it is estimated that a collision with said object (15) will occur within a first time period (t1); and
- activation of a brake system (3) of said vehicle (2) when it is estimated that a collision wiith said object (15) will occur within a second time period (t2).
